(19) Europäisches Patentamt
European Patent Office
Office européen des brevets

(11) **EP 3 721 383 B1**

(12) **FASCICULE DE BREVET EUROPEEN**

(45) Date de publication et mention
de la délivrance du brevet:
**10.08.2022 Bulletin 2022/32**

(21) Numéro de dépôt: **18811042.3**

(22) Date de dépôt: **04.12.2018**

(51) Classification Internationale des Brevets (IPC):
*G06K 19/077* [(2006.01)]   *F16L 1/11* [(2006.01)]
*H01Q 1/22* [(2006.01)]   *H01Q 3/24* [(2006.01)]
*H01Q 7/00* [(2006.01)]   *H01Q 1/04* [(2006.01)]
*G01V 15/00* [(2006.01)]   *G06K 19/07* [(2006.01)]

(52) Classification Coopérative des Brevets (CPC):
**H01Q 1/04; F16L 1/11; G01V 15/00;
G06K 19/0726; G06K 19/07766; H01Q 1/2225;
H01Q 3/24; H01Q 7/00**

(86) Numéro de dépôt international:
**PCT/EP2018/083546**

(87) Numéro de publication internationale:
**WO 2019/110615 (13.06.2019 Gazette 2019/24)**

(54) **CAPTEUR D'IDENTIFICATION OMNIDIRECTIONNEL POUR TUBE POLYMÈRE NON MÉTALLIQUE, ENFOUI À GRANDE PROFONDEUR**

OMNIDIREKTIONALER IDENTIFIZIERUNGSSENSOR FÜR EINE TIEF VERGRABENE NICHTMETALLISCHE POLYMERRÖHRE

OMNIDIRECTIONAL IDENTIFICATION SENSOR FOR A DEEPLY BURIED NON-METAL POLYMER TUBE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.12.2017 FR 1771307**

(43) Date de publication de la demande:
**14.10.2020 Bulletin 2020/42**

(73) Titulaire: **Eliot Innovative Solutions S.A.S.
38590 St Etienne de Saint Geoirs (FR)**

(72) Inventeur: **PALOMARES, Marc
38000 Grenoble (FR)**

(74) Mandataire: **Schuffenecker, Thierry
120 Chemin de la Maure
06800 Cagnes-sur-Mer (FR)**

(56) Documents cités:
**WO-A2-2011/073657   FR-A1- 2 887 712
FR-A1- 2 961 353   US-A1- 2007 057 769
US-A1- 2008 204 235   US-A1- 2014 191 904
US-A1- 2017 310 367**

**Description**

**Domaine technique de l'invention**

La présente invention concerne le domaine des capteurs d'identification RFID pour tubes non métalliques, servant à réaliser des canalisations enfouies, et notamment un capteur d'identification RFID omnidirectionnel adapté aux grandes profondeurs.

**Etat de la technique**

Les polymères (Polyéthylène PE, Polypropylène PP, PVC, PRV etc...) sont des matériaux très utilisés pour la réalisation de canalisations souterraines, permettant notamment la distribution de l'eau, du gaz, de l'électricité, des télécommunications.

L'intérêt de procéder à une détection et/ou une identification des canalisations souterraines est évident et des premières techniques ont été mises au point pour permettre une détection/identification de type RFID (ou *Radio Field Identification Detection* dans la littérature anglo-saxonne) avec une canalisation souterraine.

La demande de brevet internationale WO 2011157941 déposée le 14 Juin 2011 par le COMMISSARIAT A L'ENERGIE ATOMATIQUE ET AUX ENERGIES ALTERNATIVES, a pour objet une antenne pour milieu humide pouvant servir à la réalisation d'un détecteur/transpondeur RFID pour une canalisation polymère enterrée. L'enseignement de cette demande est une première avancée significative vis à vis la problématique de la tolérance vis-à-vis du milieu externe.

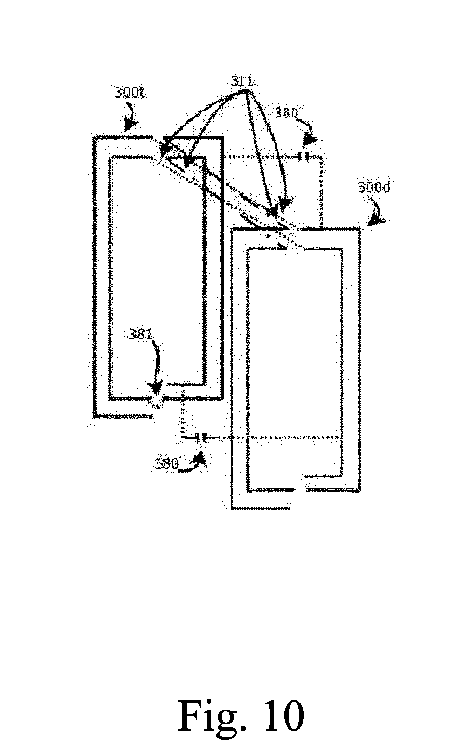

Le fonctionnement de cette antenne connue est illustrée dans la figure 10: un ensemble de spires (300t, 300d) est imprimé sur un substrat mince. Les spires du dessus (300t) sont en vis-à-vis des spires du dessous (300d). L'agencement réalisé entraine une capacité répartie (380) conséquente, due à la faible distance des spires en vis-à-vis. C'est cette capacité qui sert de capacité d'accord pour l'antenne, tandis que les segments d'antennes (300t, 300d) forment l'inductance. La mise en œuvre de boucles de Moebius et la capacité répartie (380) permettent une relative immunité face aux variations dues au milieu extérieur.

Toutefois la mise en œuvre de cette antenne est très sensible au procédé de fabrication. En effet la capacité répartie est fonction de trois paramètres directs : la largeur de chaque segment (300t) et (300d), l'épaisseur du substrat entre chaque segment (300t) et (300d), et l'alignement de ces segments entre eux. Enfin un quatrième paramètre, indirect est la valeur de la permittivité dudit substrat, qui peut varier en fonction du taux d'humidité et de la température. Ensuite au niveau cout de revient, le procédé mis en œuvre entraine la présence obligatoire d'un substrat, qui devra être imprimé avec des pistes métalliques en double face.

De son côté, la société RYB a déposé une demande de brevet WO 2012/062471 ayant pour objet un tube polymère équipé d'un capteur d'identification ou étiquette RFID.

D'une manière générale, il convient de rappeler que la technologie de communication sans fil et d'identification sans contact, désignée sous l'appellation RFID, se rapporte plus particulièrement au domaine HF de la technologie (13.56 MHz dans notre exemple) pour laquelle la communication se fait essentiellement par champ magnétique. Dans cette gamme de fréquence les distances de lecture sont généralement inférieures à 1 mètre. Le système se compose alors d'un émetteur (principe actif, générateur de puissance) et d'un transpondeur (principe passif, télé alimenté)

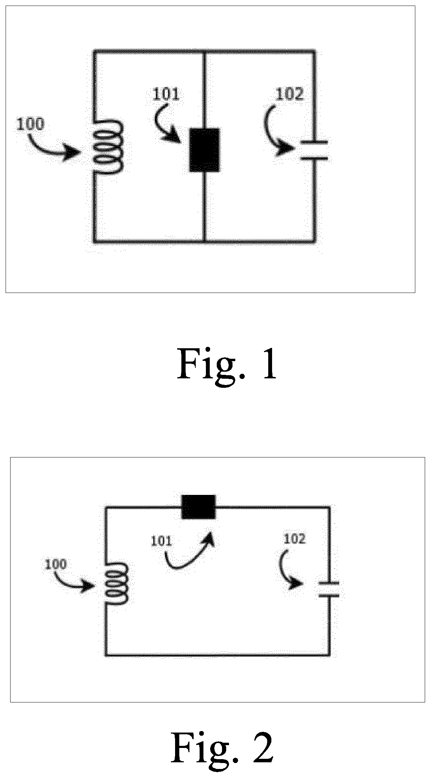

Comme cela est illustré respectivement dans les figures 1 et 2, un transpondeur RFID comporte classiquement la connexion en série (fig1), ou en parallèle (fig2), d'au moins 3 éléments qui sont une antenne (100), d'une puce RFID (101), et d'un condensateur (102).

L'antenne (100) est constituée d'une ou plusieurs spires permettant de collecter une partie de la puissance d'émission électromagnétique d'un émetteur RFID situé sur le sol. A cet égard, l'antenne dispose d'une surface minimale permettant l'activation de la puce RFID. En pratique, cette surface correspond à la captation d'une puissance minimum en relation avec la puissance maximum d'émission du lecteur, la distance de détection et les besoins en puissance de la puce RFID. Le nombre de spire sera en relation avec la tension minimale d'activation de la puce RFID.

L'antenne présente une inductance désignée $L_{ant}$. Cette valeur d'inductance est une fonction de la géométrie de l'antenne. A titre d'exemple, une approximation pour une antenne circulaire composée de N spires jointives ou superposées, d'un rayon R et d'un diamètre de conducteur a est la suivante :

$$L = \mu_0 * R * N^2 * \left(\ln\left(\frac{8*R}{a}\right) - 2\right) \quad \text{avec } \mu_0 = 4\pi$$

* $10^{-7}$ et Ln étant l'opérateur Logarithme népérien.

La puce RFID peut être assimilée à un condensateur notée $C_{tag}$. Une valeur donnée à titre d'exemple est de l'ordre de 20 pF ($20*10^{-12}$ F)

L'ensemble doit résonner à une fréquence proche de la fréquence du signal, et comme cela est connu d'un homme du métier, l'équation qui donne la fréquence de résonance est :

$$f_0 = \frac{1}{2\pi\sqrt{L_{ant}*C_{acc}}}$$

avec $C_{acc} = C_{102} + C_{tag}$ pour la figure 1 (cas parallèle) ou

$$C_{acc} = \frac{C_{102}*C_{tag}}{C_{102}+C_{tag}}$$

pour la figure 2 (cas série). $C_{acc}$ Représente la capacité d'accord du système résonnant.

Si $L_{ant}$ est imposé par la géométrie de l'antenne, $f_0$ est imposé par le système, il ne reste plus comme variable d'ajustement que $C_{acc}$. Cette valeur nous est donnée par la relation bien connue :

$$C_{acc} = \frac{1}{4\pi^2 * f_0^2 * L_{ant}}$$

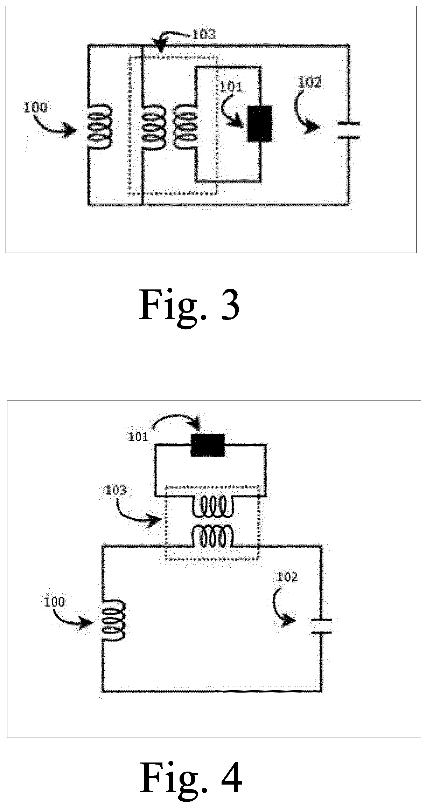

D'autres techniques peuvent être réalisées, comme dans les figures 3 et 4, où l'on voit à présent que la puce RFID 101 est isolée du circuit résonant au moyen d'un coupleur 103.

Par ailleurs, il est à noter que, pour atténuer les effets des dérives en fréquences (dérives des valeurs de composants liées à la température ou à la dispersion due à la tolérance, ou encore aux milieux dans lesquels sont disposés les transpondeurs), les conceptions classiques imposent un facteur qualité relativement bas (généralement de l'ordre de 30 à 40). Or, plus la surface d'antenne et/ou le nombre de spires augmente, plus $L_{ant}$ augmente, le facteur qualité étant proportionnel à $L_{ant}$ celui-ci augmente donc, jusqu'à devenir problématique pour un industriel qui envisage la réalisation en masse d'étiquettes RFID pour des canalisations polymères enfouies. En effet, lorsque $L_{ant}$ augmente (Augmentation de la surface ou augmentation du nombre de spires) l'on constate que $C_{acc}$ doit diminuer pour pouvoir garder le circuit résonnant à $f_0$. Si pour une réalisation donnée l'on obtient $L_{ant}$ = 11 $\mu H$ (11 * 10^{-6} *H),* avec par exemple $f_0$ = 13.56 *MHz* (13.56 * 10^6 *Hz),* alors $C_{acc}$ = 12.52 pF.

L'on constate alors qu'il est pratiquement impossible de réaliser un circuit avec mise en parallèle des constituants, comme cela est illustré dans la figure 1. Il ne reste donc que la mise en série illustrée en figure 2, ce qui impose, avec des formules bien connues d'un homme du métier, $C_{102}$ = 33.5 pF, mais ce faisant, et toujours par des formules bien connues, nous imposons un pont diviseur de tension formé par $C_{tag}$, $C_{102}$. Ce qui dans notre exemple introduit une chute de tension au borne de $Y_{101}$ de l'ordre d'un tiers, diminuant alors la capacité de détection du transpondeur.

L'utilisation du procédé de couplage illustré en figures 3 et 4 pourrait améliorer la situation mais s'avère relativement couteuse pour une industrialisation de masse, soit du point de vu composant (1 composant coupleur supplémentaire) soit du point de vue fabrication pour le positionnement d'une puce pré équipée d'un élément de couplage. De plus le rendement global du transpondeur est diminué de par la présence du coupleur, dû au rendement intrinsèque de celui-ci.

Par ailleurs, il a été constaté qu'aucune des solutions connues, et notamment la solution précitée décrite dans la demande de brevet WO 2011157941 précitée ne permet de garantir une bonne tolérance sur la fréquence d'accord. L'on constate que cette fréquence $f_0$ va dépendre de 3 paramètres directs distincts : le procédé de réalisation des spires (100, 200x) (influence sur la valeur de l'inductance), la tolérance sur les capacités d'accord (102, 202x), et enfin les tolérances sur les capacités parasites (280x, capacité de (201)). Un 4^{ème} facteur, lui indirect, est la température de fonctionnement, qui va introduire une dérive des différentes valeurs (essentiellement les capacités) par rapport à une température nominale (typiquement 25 °C)

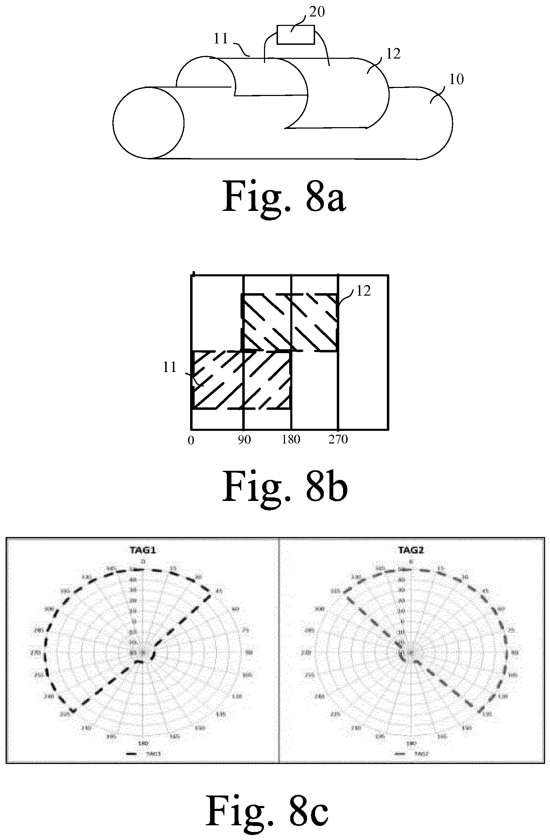

Pour les variations dues aux températures, des mesures ont été relevées, et sont illustrées dans la figure 8b, et l'on observe que le décalage en fréquence est de l'ordre de 140 kHz sur la plage 0 - 40 °C.

Si l'on tient compte des tolérances sur les valeurs de composant, par exemple une variation de 2% sur la valeur nominale de la capacité d'accord entraine une variation de 130 kHz sur la fréquence de résonnance.

Ainsi, sans tenir compte d'autres influences (dues au milieu notamment) nous avons un minimum de 270 kHz de variation possible sur la fréquence de résonance.

Cette problématique particulière a été significativement traitée par la demande de brevet internationale PCT/EP2017/074142 en date du 22 Septembre 2017 déposée par la demanderesse de la présente demande, revendiquant la priorité de la demande de brevet français FR16/10392 en date du 23 Septembre 2016, au moyen d'une 'étiquette RFID basée sur une disposition spécifique d'antenne comprenant :

- un ensemble de segments d'antennes constitués de conducteurs électriques constituant au moins un premier et un second élément d'antenne (203-1, 203-2),
- un circuit imprimé comportant une puce RFID et au moins une capacité d'accord (202x) ainsi qu'un connecteur (281) permettant le raccordement électrique desdits segments d'antennes. Les segments d'antenne sont disposés proches les uns des autres, à une distance inférieure à 3 mm et de préférence inférieure à 1 mm, de manière à permettre l'apparition de capacités de couplage susceptible d'élargir la bande de tolérance sur la fréquence de résonance RFID.

De cette manière l'on réalise une étiquette RFID susceptible de permettre l'identification d'un tube polymère enfoui à grande profondeur.

En revanche, de nombreuses mesures et expérimentations ont montré que si cette étiquette RFID ainsi conçue permet de détecter et d'identifier des tubes jusqu'à une grande profondeur, l'efficacité de cette devient dépendante de la position que prend cette dernière par rapport au tube enfoui.

Dans une disposition favorable, l'étiquette serait positionnée sur le dessus du tube enfoui, de manière à présenter son antenne dans un plan horizontal, et par conséquent perpendiculaire à l'axe le séparant d'un détecteur de surface.

Dans une disposition moins favorable, si le tube n'est pas idéalement positionné dans sa tranchée - ce qui peut arriver lorsque le tube est tractée à l'intérieur d'une tranchée ou d'un conduit - l'étiquette pourrait ne pas se présenter idéalement avec une orientation de l'antenne optimale pour recevoir le flux magnétique maximum du détecteur de surface.

Dans cette situation, l'étiquette RFID pourra tout simplement ne pas être visible pour le détecteur de surface.

L'invention vise à résoudre ce problème crucial.

Les brevets suivants constituent des antériorités d'arrière plan général :

US 2007/057769 décrit une méthode d'identification de la localisation de tuyaux basée sur une technologie RFID.

US 2017/310367 décrit un dispositif électronique pour la transmission d'ondes électromagnétiques dans de multiples directions.

## Exposé de l'invention

La présente invention a pour but de détecter une puce RFID enfoui à grande profondeur - jusqu'à trois mètres - permettant une détection et une identification omnidirectionnelle d'une canalisation polymère non métallique.

Un autre but de la présente invention consiste à proposer un transpondeur, autorisant une grande tolérance relativement à la rotation du tube relativement à son axe de génératrice au sein de la tranchée ou du conduit enfoui sous terre.

C'est un troisième but de la présente invention que de fournir transpondeur à faible coût de fabrication et apportant une meilleure efficacité énergétique par rapport aux réalisations existantes.

C'est un autre but de la présente invention que de permettre la réalisation d'une étiquette RFID qui puisse être utilisée comme marqueur intégré à un tube ou une canalisation posée par tractage, c'est-à-dire sans tranchée.

L'invention réalise ces buts au moyen d'un transpondeur selon la revendication 1, pour un système de communication sans fil et d'identification sans contact, de type RFID, configuré pour être apposé sur une canalisation polymère enfouie, ledit transpondeur comprenant :

- une puce RFID ;
- un circuit électronique de commutation couplé à la dite puce RFID ;
- une première antenne couplée audit circuit de commutation, la dite première antenne ayant une surface configurée pour couvrir une première partie de la surface extérieure de ladite canalisation polymère ;
- une seconde antenne couplée audit circuit de commutation, ladite seconde antenne ayant une surface configurée pour couvrir une seconde partie de la surface extérieure de ladite canalisation polymère, ladite seconde partie étant distincte de ladite première partie ;

Le circuit de commutation est configuré pour :

- Coupler ladite première antenne à ladite puce RFID lorsque la tension captée au bord de la dite première antenne et correspondant au champ magnétique par un émetteur RFID est supérieure à la tension captée au bord de la seconde antenne ;
- Coupler ladite seconde antenne à ladite puce RFID lorsque la tension captée au bord de la dite seconde antenne par un émetteur RFID est supérieure à la tension captée au bord de la première antenne.

Dans un mode de réalisation préférentiel, le transpondeur comporte un ensemble de trois antennes couplées au circuit de commutation, la surface de couverture de chacune desdites première, seconde et troisième antennes correspondant à un angle de 120 degrés. Le circuit de commutation est alors configuré pour coupler la puce RFID à celle parmi les première, seconde et troisième antenne qui présente une tension la plus élevée , dans lequel ledit circuit de commutation découple les deux autres antennes présentant les tensions les plus faibles.

Plus spécifiquement, le transpondeur est destiné à l'identification d'une canalisation de distribution de fluide (ex : eau potable) ou de gaz, de protection de câble électrique ou de câble de fibre optique.

## Description des dessins

D'autres caractéristiques, but et avantages de l'invention apparaîtront à la lecture de la description et des dessins ci-après, donnés uniquement à titre d'exemples non limitatifs. Sur les dessins annexés :

La figure 1 illustre la structure classique d'un transpondeur RFID basée sur la connexion en parallèle d'une antenne, d'une puce RFID et d'un condensateur.

La figure 2 illustre la structure classique d'un transpondeur RFID basée sur la connexion en série d'une antenne, d'une puce RFID et d'un condensateur.

Les figures 3 et 4 illustrent deux variantes d'une architecture connue d'un transpondeur RFID comportant un coupleur 103 permettant la connexion de la puce RFID à l'élément oscillant.

La figure 5 illustre le schéma électrique transpondeur RFID comportant une puce RFID et une pluralité d'éléments d'antenne.

La figure 6a présente une première topologie de segments d'antennes organisée de manière concentrique.

La figure 6b présente une seconde topologie consistant en une superposition dans l'axe perpendiculaire à la surface des différents segments antennes.

La figure 6c présente une troisième topologie consistant à torsader les différents segments d'antennes entre eux pour former une torsade

La figure 7a illustre un circuit imprimé comportant deux éléments d'antenne se composant de trois segments d'antenne.

La figure 7b illustre un circuit imprimé comportant également deux éléments d'antenne se composant de six segments d'antenne.

La figure 7c illustre le raccordement du connecteur de la figure 7a dans lequel les trois segments d'antennes sont réalisés au moyen d'un unique câble tri-conducteur.

La figure 7d illustre le raccordement du connecteur de la figure 7b dans lequel les six segments d'antennes sont réalisés au moyen de câbles tri-conducteur.

Les figures 8a, 8b et 8c illustre un premier mode de réalisation selon l'invention visant à combiner une unique puce RFID à au moins deux antennes couplées à un commutateur électronique.

Les figures 8d et 8 e illustrent plus particulièrement le détail du circuit électronique de commutation.

La figure 8f illustre un mode de réalisation particulièrement préféré, dans lequel une puce RFID unique est associée à trois antennes rectangulaires associées.

La figure 9a illustre un second mode de réalisation (qui n'est pas selon l'invention) dans lequel l'on vient réaliser un groupement logique de deux étiquettes RFID.

La figure 9b illustre un mode de réalisation (qui n'est pas selon l'invention) d'un procédé de communication entre un transpondeur conforme au second mode de réalisation et un lecteur de surface.

La figure 10 illustre le schéma de principe de la solution préconisée par la demande de brevet WO 2011157941 précitée

**Description des modes de réalisation préféré**

L'on va considérer à présent un mode de réalisation particulier d'un transpondeur RFID destiné à la réalisation d'une étiquette RFID omnidirectionnelle pour une conduite ou canalisation destinée à être enfouie sous terre, qui devient significativement insensible à l'orientation de la canalisation dans la tranchée. On considère typiquement l'exemple d'un tube PEHD (Polyéthylène Haute Densité), propre à la réalisation d'une canalisation pour l'adduction d'eau potable, la distribution du gaz, l'assainissement, la protection de câble électrique et de fibre optique. L'on pourra considérer en particulier l'exemple d'un tube multicouche en polyéthylène pour conduites enterrées en pression, constitué par un tube en polyéthylène à haute densité PE 80 ou PE 100 répondant à la norme EN1555. Plus spécifiquement, l'étiquette RFID servira à transmettre des informations relatives à l'identité, des caractéristiques de fabrication du tube, et de la localisation du tube.

L'exposé décrit successivement :

- Descriptif d'une antenne élémentaire pour étiquette RFID
- Premier mode de réalisation : Etiquette RFID omnidirectionnelle à antennes déconnectables
- Second mode de réalisation (qui n'est pas selon l'invention)
- Macro -étiquette RFID

**1. Descriptif d'une antenne élémentaire pour étiquette RFID.**

L'exposé reprendra une partie significative de l'enseignement de la demande PCT/EP2017/074142 .

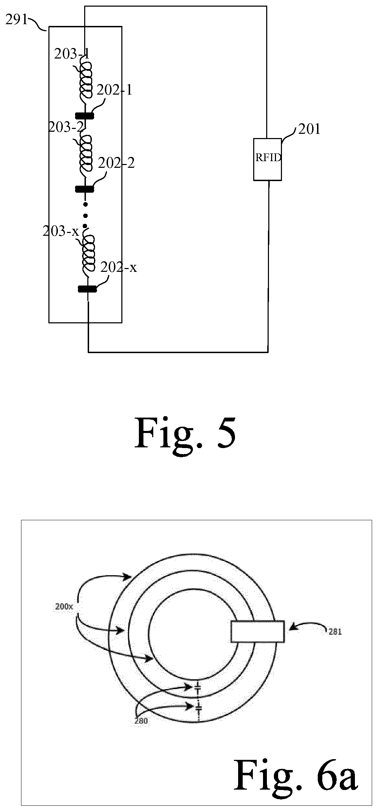

En se référant à la figure 5, le transpondeur RFID consiste en un système résonant, comportant une antenne 291, constitué d'une mise en série d'éléments d'antennes 203-1, 203-2, ... 203-x, de capacités 202-1, 202-2 ... 202-x, mis en série avec une puce RFID 201 conventionnelle. La puce RFID est un circuit intégré adaptée pour la mise en œuvre des techniques de communication sans fil et d'identification sans contact désignées sous l'appellation RFID. Une telle puce RFID est bien connue d'un homme du métier et, dans un souci de concision, ne sera pas décrite plus avant.

Dans la figure 5, chaque extrémité d'un *élément d'antenne* est raccordée soit à une capacité 202-1, 202-2, ... 202-x, soit à une électrode de la puce RFID 201.

D'une manière générale, chaque élément d'antenne se compose d'un ou plusieurs éléments conducteurs physiques individualisés - ou *segments d'antenne* désignés par la référence générique 200x (non représentés dans la figure 5), dont chacun est constitué d'au moins une fraction notable de spire constituant l'élément de captation.

Un premier segment d'antenne pourra être, par exemple, constitué d'une demi-spire. Un second segment d'antenne pourra être constitué d'une spire entière. Un troisième segment d'antenne pourra se composer d'une spire et demi. Un quatrième de deux spires etc...

Ainsi, les *éléments d'antenne* 203-1, ... 203-x pourront prendre des configurations diverses et variées , basées sur de multiples combinaisons de *segments d'antennes* 200x.

D'une manière générale, chaque *segment d'antenne* 200x est constitué d'un conducteur électrique, isolé ou non, disposé au sein d'un câble multibrin ou monobrin, sans restriction de section. Chaque segment d'antenne 200x peut différer d'un autre, tant par la géométrie que par le nombre de spires, autorisant ainsi de grandes possibilités de variation dans la conception de l'étiquette RFID.

En ce qui concerne les capacités 202-1, 202-2, ... 202-x représentées dans la figure 5, il est à noter que celles-ci peuvent prendre des formes bien diverses. En particulier, une capacité 202-x n'est pas forcément restreinte à un seul élément, mais peut se concevoir comme une mise en série et/ou parallèle de plusieurs capacités individuelles, formant selon les règles de l'art l'équivalent d'une capacité unique. De la même manière, l'on notera que les capacités 202-1, 202-2, ..., 202-x pourront être de valeur différente.

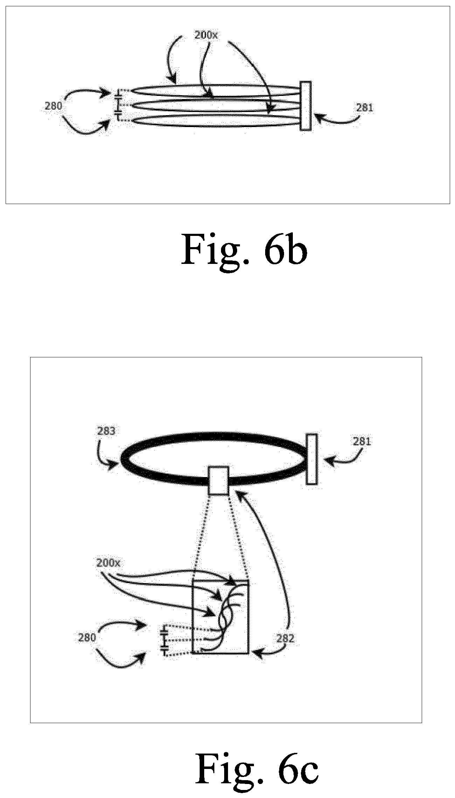

Les *segments d'antennes* 200x composant les *éléments d'antenne* 203-1, ..., 203-x, peuvent être agencés sur un support, uivant comme cela est illustré dans les figures 6a, 6b et 6c.

Plus spécifiquement, la figure 6a illustre une première topologie de disposition des *segments d'antenne* 200x basée sur une imbrication concentrique de trois segments d'antennes 200x électriquement connectés à un circuit imprimé 281. Dans cette configuration, les trois segments d'antenne présentent une forme circulaire, disposés au sein d'un même plan, et sont disposés de manière très proche. Deux segments d'antenne immédiatement voisins sont situés à une distance inférieure à 3mm et de préférence 1mm pour permettre l'apparition de capacité de couplage 280 illustrées dans la figure 6a.

Une seconde topologie est illustrée dans la figure 6b où l'on voit la superposition dans l'axe perpendiculaire à la surface des différents *segments d'antennes,* par exemple trois *segments d'antenne.* Comme précédemment, les trois *segments d'antenne,* électriquement connectés au circuit imprimé ou connecteur 281, sont disposés de manière très proche, à une distance inférieure à 1mm de préférence, pour permettre l'apparition des capacités de couplage également représentées, dans la figure 6b, par la référence 280.

Enfin, la figure 6c illustre une troisième topologie dans laquelle on vient torsader les différents *segments d'antennes* 200x constitutifs des *éléments d'antennes* 203-1... 203-x entre eux pour former une torsade 282 qui éventuellement peut être surmoulé pour former une gaine unique 283 connecté à un circuit imprimé ou connecteur 281. Dans cette configuration, c'est le fait de torsader les différents *segments d'antenne* constitutifs des *éléments d'antenne* qui permet de faire apparaitre des capacités de couplage dont l'intérêt apparaîtra , avec force, dans l'exposé qui va suivre ci-après. Les topologies illustrées dans les figures 6a, 6b et 6c ne sont que des exemples illustratifs des multiples possibilités de topologies envisageables pour réaliser une étiquette RFID. D'une manière générale, un homme du métier pour concevoir une combinaison des différentes topologies illustrées, comme par exemple deux groupes distincts de segments d'antennes de 3 spires, chacun réalisé suivant la topologie de la figure 6c, et les deux groupes étant par la suite assemblée suivant la topologie de la figure 6b.

Clairement, il n'y a pas de limites dans les possibilités de combinaison des différentes topologies illustrées.

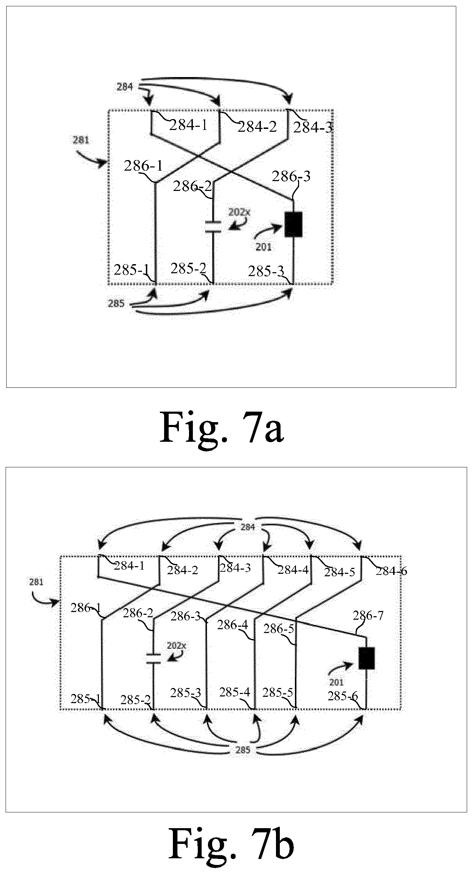

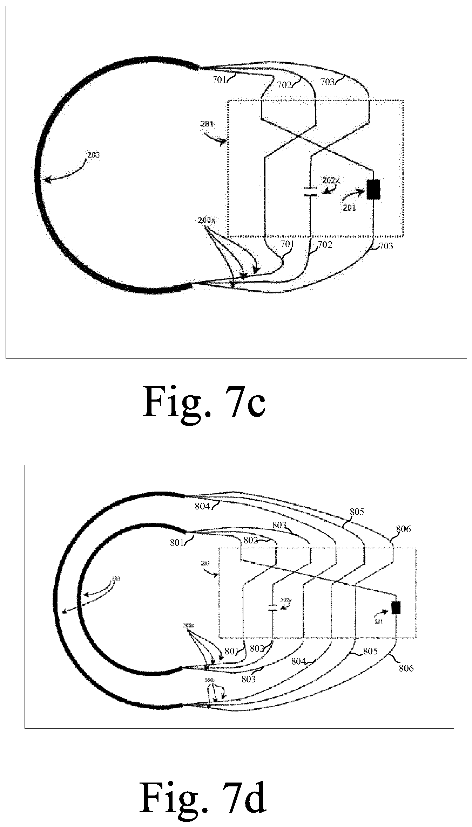

L'on décrit à présent, en référence aux figures 7a, 7b, 7c et 7c, de manière plus particulière le connecteur 281 permettant le raccordement électrique des segments d'antennes à l'élément oscillant du transpondeur RFID.

D'une manière générale, le connecteur 281 est réalisé pour permettre le raccordement électrique des différents *segments d'antenne,* les uns aux autres mais également au(x) capacité(s) 202-1, 202-2, ...202x, et à la puce RFID 201, afin de réaliser l'élément oscillant dont le schéma électrique est représenté dans la figure 5. Dans sa forme la plus simple, le connecteur pourra se présenter sous la forme d'un circuit intégré sur lequel est disposé, la puce RFID 201, et le ou les différentes capacités 202-1, 202-2, ...202x.

Dans un souci de simplicité, l'on a représenté, dans les figures 7a-7d, une unique capacité 202x associée à une puce RFID, en sorte que les figures 7a-7d représentent, suivant le schéma de la figure 5, un ensemble de deux *éléments d'antenne* (deux coupures dans la connexion série, une pour la puce RFID et une pour la capacité 202x).

Les différents *segments d'antenne* sont électriquement connectés via des électrodes 284 et 285, qui pourront être en nombre quelconque.

Par exemple, le connecteur 281 de la figure 7a prend la forme d'un circuit imprimé comportant un ensemble de trois électrodes d'entrées, respectivement 284-1, 284-2, 284-3 et trois électrodes de sortie 285-1, 285-2 et 285-3 pour la connexion respective de trois segments d'antenne 701, 702, 703 constitutifs de l'antenne 291 .

Le circuit imprimé/connecteur comporte:

- une première électrode d'entrée 284-1, une seconde électrode d'entrée 284-2 et une troisième électrode d'entrée 284-3 qui permettent la connexion d'une première extrémité du premier segment 701, du second segment 702 et du troisième segment d'antenne 703, respectivement;
- une quatrième électrode de sortie 285-1, une cinquième électrode de sortie 285-2 et une sixième électrode de sortie 285-3 qui permettent la connexion d'une seconde extrémité du premier segment d'antenne 701, du second segment d'antenne 702 et du troisième segment d'antenne 703.

Le circuit imprimé comporte en outre:

- un premier circuit 286-3 permettant le raccordement de la première électrode d'entrée 284-1 à la troisième électrode de sortie 285-3 via une puce RFID;

- un second circuit 286-1 permettant le raccordement de la seconde électrode d'entrée 284-2 à la première électrode de sortie 285-1 ;
- un troisième circuit 286-2 permettant le raccordement de la troisième électrode d'entrée 284-3 à la seconde électrode de sortie 285-2 via la capacité 202x .

Dans le schéma de la figure 7c, les premier, second et troisième segments d'antenne 701, 702, 703 sont intégrés au sein d'un même câble électrique à trois conducteurs permettant de générer une capacité répartie entre lesdits segments d'antenne.

En référence à la figure 7c, on décrit à présent un circuit imprimé comportant un connecteur 281 permettant le raccordement de six segments d'antennes 801, 802, 803, 804, 805 et 806.

Plus spécifiquement, le circuit imprimé comporte une première électrode d'entrée 284-1, une seconde électrode d'entrée 284-2, une troisième électrode d'entrée 284-3, une quatrième électrode d'entrée 284-4, une cinquième électrode d'entrée 284-5 et une sixième électrode d'entrée 284-6 permettant la connexion d'une première extrémité d'un premier segment d'antenne 801, d'un second segment d'antenne 802, d'un troisième segment d'antenne 803, d'un quatrième segment d'antenne 804, d'un cinquième segment d'antenne 805 et d'un sixième segment d'antenne 806, respectivement.

Le circuit imprimé comporte en outre une septième électrode de sortie 285-1), une huitième électrode de sortie 285-2, une neuvième électrode de sortie 285-3, une dixième électrode de sortie 285-4, une onzième électrode de sortie 285-5 et une douzième électrode de sortie 285-6 permettant la connexion d'une seconde extrémité du premier segment d'antenne 801, du second segment d'antenne 802, du troisième segment d'antenne 803, du quatrième segment d'antenne 804, du cinquième segment d'antenne 805 et du sixième segment d'antenne 806, respectivement.

Le circuit imprimé de la figure 7c comporte:

- un premier circuit 286-7 permettant le raccordement de la première électrode d'entrée 284-1 à la sixième électrode de sortie 285-6 via une puce RFID;
- un second circuit 286-1 permettant le raccordement de la seconde électrode d'entrée 284-2 à la première électrode de sortie 285-1 ;
- un troisième circuit 286-2 permettant le raccordement de la troisième électrode d'entrée 284-3 à la seconde électrode de sortie 285-2 via la capacité 202x;
- un quatrième circuit 286-3 permettant le raccordement de la quatrième électrode d'entrée 284-4 à la troisième électrode de sortie 285-3 via une puce RFID;
- un cinquième circuit 286-4 permettant le raccordement de la cinquième électrode d'entrée 284-5 à la quatrième électrode de sortie 285-4 ;

- un sixième circuit 286-5 permettant le raccordement de la sixième électrode d'entrée 284-6 à la cinquième électrode de sortie 285-5 .

De préférence, les premier, second et troisième segments d'antenne 801, 802 et 803 sont intégrés au sein d'un premier câble électrique à trois conducteurs et les quatrième, cinquième et sixième segments d'antenne 804, 805 et 806 sont intégrés au sein d'un second câble électrique à trois conducteurs, comme cela est illustré dans la figure 7d.

L'agencement des segments d'antennes (200x) mis en œuvre dans un des exemples (fig. 6a, 6b et 6c), ou un mélange de ceux-ci, fait qu'il existe un couplage capacitif (280) entre chaque conducteur (segment d'antenne) (200x), plus ou moins important. Les capacités réparties (280) sont créées soit naturellement par la proximité de conducteurs électrique, soit par l'implémentation effective de capacités, De plus, la présence d'une enveloppe extérieure (surmoulage) (283) peut encore augmenter la valeur de cette capacité répartie. C'est ce couplage capacitif qui assure une immunité assez forte aux contraintes de dispersion, aussi bien qu'aux influences dispersives des milieux extérieurs.

La structure des antennes est déterminée de sorte que les conducteurs soient espacés de 1 à 3 mm. Les conducteurs sont surmoulés 3 par 3 brins avec un composant ayant un $\varepsilon_r \cong 5$. Ceci nous donne une capacité linéique (280) entre chacun des 3 brins pris 2 à 2 d'une valeur comprise entre 50 et 75 pF/m.

**Fonctionnement et adaptation de la fréquence de résonnance, résistance aux tolérances et aux variations**

La pluralité des segments d'antennes (200x) forme la surface de captation, cette surface doit être suffisante pour répondre au besoin de l'alimentation en puissance de la puce RFID (201). Le nombre total de spires issu de la pluralité des segments d'antennes est tel que la tension aux bornes de la puces RFID (201) soit suffisante pour l'activer.

L'accord en fréquence est le résultat en premier lieu de la mise en série d'une part de l'inductance de l'antenne globale (pluralité des (200x)) et d'autres par la pluralité des capacités (202x) mises en série.

Toutefois les capacités reparties (280), bien qu'ayant un impact faible sur la fréquence de résonnance, joue toutefois un rôle dans le calcul de la capacité d'accord.

Mais le vrai rôle de ces capacités réparties (280) est, d'une part, d'atténuer l'influence des capacités parasites introduites par l'environnement extérieure, et d'autre part, de permettre un élargissement de la tolérance sur la fréquence d'accord tel que l'indique la figure 8a.

Sur quelques exemples nous allons regarder quelle variation de la fréquence d'accord nous garantit une diminution de moins de 10 cm de la distance maximale de lecture. Deux tests concernent des exemples réalisés suivant l'enseignement de la demande de brevet WO 2011157941 précitée (M1), tandis que deux autres réalisations (M2, M3) sont relatives à l'enseignement actuel.

Sur une réalisation de test (M1), les spires ont été éloignées de 10 mm les unes des autres, de sorte que la capacité répartie soit réduite au maximum, et l'on obtient : $f_{era4,min}$ = 13.525 *MHz* et $f_{M1,max}$ = 13.745 *MHz* , soit $\Delta_{M1}$= 220 *kHz*

Sur l'exemple de la figure 7c décrit précédemment, dans lequel les spires (au nombre de 3) sont étroitement torsadées entre elles, l'on obtient : $f_{eis2,min}$ = 13.495 *MHz* et $f_{M2,max}$ = 13.825 *MHz,* soit $\Delta_{M2}$= 330 *kHz* Ce qui représente une amélioration de 50% de la bande de tolérance.

Sur des réalisations existantes correspondant à l'enseignement de la demande de brevet WO 2011157941 précitée (M1), il a été effectué une estimation de la largeur de la bande de tolérance (Fig.8c), et l'on obtient l'estimation : $f_{hum,min}$ = 13.535 *MHz* et $f_{hum,max}$ = 13.810 *MHz,* soit $\Delta_{hum}$= 275 *kHz*

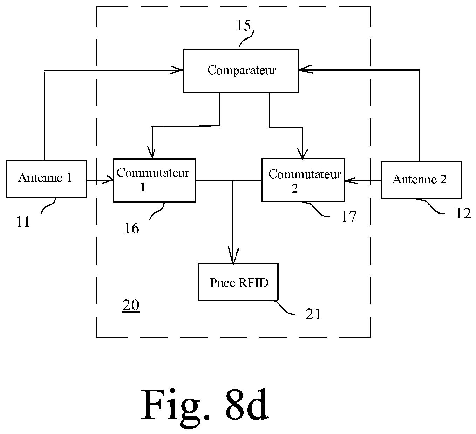

Sur l'exemple (M3) de la Fig. 7d , dans lequel les spires sont étroitement torsadées entre elles, formant un total de deux groupes de 3 spires, la plage de tolérance a pu être déterminée, comme illustré en figure 8d : $f_{eis2,min}$ = 13.540 *MHz* et $f_{M3,max}$ = 13.930 *MHz,* soit $\Delta_{M3}$= 390 *kHz* Ce qui représente une augmentation de plus de 40% de la bande de tolérance.

De plus, dans cet exemple (M3), la surface d'antenne est de 63 cm2, à comparer aux 132 cm2 de la solution permise par la demande de brevet WO2011157941 précitée, pour une distance de détection supérieure de 30 cm (180 cm au lieu de 150 cm). Dans un exemple décrit précédemment, il a été obtenu, pour une surface de 19.6 cm2, une distance de lecture de 144 cm. A partir d'une courbe d'interpolation (calculée à partir de divers exemples), il a pu être estimé qu'une surface de 23.25 cm2 était nécessaire pour atteindre les 150 cm, soit 6 fois moins de surface que la solution préconisée par la demande de brevet WO2011157941 précitée.

Comme on le constate, il est possible d'accroître significativement la plage de tolérance de la fréquence d'accord, et en outre, de gagner en efficacité énergétique, puisqu'il nous faut moins de surface de captation par rapport à des tags existants pour une même distance de détection.

## 2) Premier mode de réalisation : Etiquette RFID omnidirectionelle à antennes déconnectables

Ce premier mode de réalisation selon l'invention va être décrit en relation avec les figures 8a à 8f, dans lequel on vient associer une unique puce RFID avec au moins une première et une seconde antenne, respectivement 11 et 12, telle que décrites précédemment, et fixées sur l'enveloppe extérieure d'un tube ou canalisation 10 .

Plus spécifiquement, la figure 8a est une vue en perspective montrant le tube polymère 10 sur lequel on vient « apposer » ou enrouler les deux surfaces flexibles des antennes 11 et 12, de forme sensiblement rectangulaires comme cela apparaît dans la vue éclatée de la figure 8b, mais décalée de façon à couvrir ou exposer un angle solide différencié pour chacune des antennes. La figure 8c illustre par deux graphiques, les couvertures ou expositions distinctes des deux antennes (TAG1, TAG2).

Chacune des deux antennes 11 et 12 est couplée à un circuit électronique 20 comportant en son sein, ou lui-même couplé à une unique puce RFID 21.

En pratique plusieurs configurations sont envisageables pour venir poser des deux antennes RFID l'une à côté de l'autre, juxtaposée ou non, en fonction de divers critères et performances requises. Une fois fixées sur la canalisation, on pourra recouvrir ces antennes de polypropylène pour en assurer la protection.

La figure 8d illustre un schéma synoptique d'un circuit électronique 20 auquel est couplée chacune des deux antennes 11 et 12. Le circuit 20 comporte un comparateur de tension 15 ayant deux entrées et deux sorties. Chacune des entrées du comparateur 15 est connectée à une des deux antennes 11 et 12 pour y venir détecter la tension captée. La première sortie du comparateur 15 est connectée à une première entrée d'un premier commutateur 16, dont une seconde entrée reçoit également le potentiel captée par l'antenne 11. La seconde sortie du comparateur 15 est connectée à une première entrée d'un second commutateur 17, dont une seconde entrée reçoit le potentiel capté par l'antenne 12.

Les sorties des commutateurs 16 et 17 sont couplées à la puce RFID 21 en sorte que, en fonction de la tension captée par chacune des antennes 11 et 12, le comparateur 15 commande les deux commutateurs 16 et 17 pour :

- assurer le couplage de la première antenne 11 à la puce RFID 21 lorsque c'est le potentiel capté par cette première antenne 11 qui est supérieure à celui de la seconde antenne 12 ; et
- Inversement, assurer le couplage de la seconde antenne 12 à la puce RFID 21 lorsque c'est le potentiel capté par la seconde antenne 12 qui est supérieur à celui de la première antenne 11.

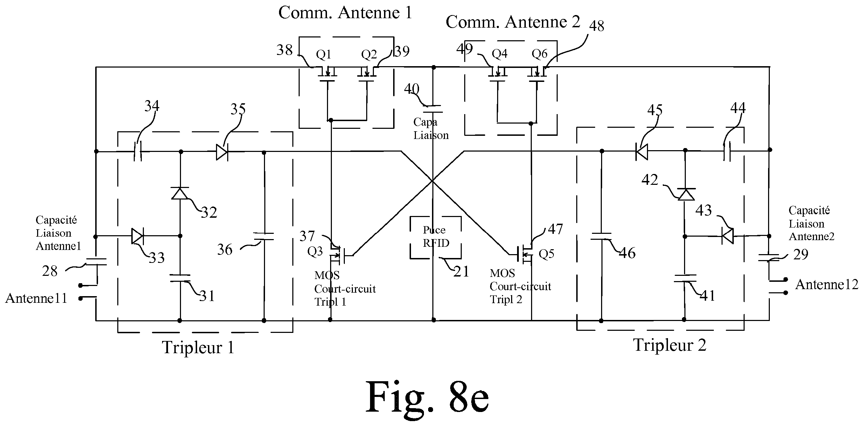

La figure 8e illustre un schéma type d'implémentation d'un schéma de principe d'un circuit électronique destiné à assurer la commutation entre les antennes 11 et 12. A cet égard, les deux antennes 11 et 12 sont couplées au circuit électronique via deux capacités de liaisons, respectivement 28 et 29. Le circuit comporte en outre deux circuits tripleurs de tension, permettant d'obtenir un potentiel suffisant pour actionner, le cas échéant deux circuits MOS respectivement 37 et 47, permettant de venir commander deux paires Q1-Q2 et Q4-Q6 de transistors MOS, respectivement 38-39 et 49-48, connectées en série et permettant d'assurer le couplage ou le découplage du potentiel de sortie des antennes 11 et 12 à la puce RFID vers une capacité de liaison 40.

Plus spécifiquement le premier tripleur comporte :

- une première branche connectée entre l'antenne 11 (via la capacité 28) et la grille du transistor 47 (Q5) se composant, en série, d'une capacité 34 et d'une diode 35 dont la cathode est connectée à la grille du transistor 47 ;
- une seconde branche connectée entre la terre et le point milieu de la première branche, se composant d'une capacité 31 connectée à l'anode d'une diode 32 dont la cathode est connectée à l'anode de la diode 35 ;
- une diode 33 dont l'anode est connectée au point milieu entre la capacité 28 et la capacité 34, et dont la cathode est connectée au point milieu de la seconde branche, à savoir l'anode de la diode 32;
- une capacité 36 connectée entre la cathode de la diode 35 et la terre.

D'une manière similaire, le second tripleur comporte :

- une première branche connectée entre l'antenne 12 (via la capacité 27) et la grille du transistor 37 (Q3) se composant, en série, d'une capacité 44 et d'une diode 45 dont la cathode est connectée à la grille du transistor 37 ;
- une seconde branche connectée entre la terre et le point milieu de la première branche du second tripleur, se composant d'une capacité 41 connectée à l'anode d'une diode 42 dont la cathode est connectée à l'anode de la diode 45 ;
- une diode 43 dont l'anode est connectée au point milieu entre la capacité 29 et la capacité 44, et dont la cathode est connectée au point milieu de la seconde branche du second tripleur , ie à l'anode de la diode 42;
- une capacité 46 connectée entre la cathode de la diode 45 et la terre.

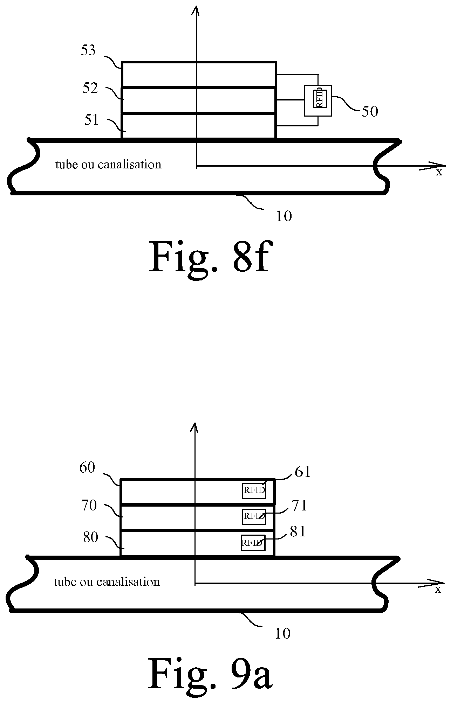

Le circuit de la figure 8 e n'est qu'un exemple particulier d'un schéma envisageable pour réaliser une commutation des antennes. D'autres réalisations pourraient être considérées, tel par exemple un interrupteur gravitationnel qui permettrait de déconnecter physiquement l'antenne dont la position serait la moins optimale, voir encore un dispositif à base de fusibles permettant de brûler physiquement les connexions entre la puce RFID et l'une des antennes qui ne permettrait pas une réception optimale avec un transmetteur RFID.

Le circuit électronique de commutation 20 permet, comme on l'a vu, de réaliser le couplage de deux antennes à une unique puce RFID.

Les inventeurs ont cependant découverts que les résultats les plus prometteurs peuvent être obtenus en associant, dans ce mode de réalisation, non pas deux mais trois antennes à une unique puce RFID suivant une disposition bien spécifique, et illustrée dans la figure 8f que l'on va décrire à présent.

En référence à la figure 8, on voit trois antennes , respectivement 51, 52 et 53 , de forme sensiblement rectangulaires suivant les axes x et y qui sont jointives au niveau de leur longueur (axe x), de préférence égale à 40cm. La largeur de l'antenne est calculée de manière à correspondre à un tiers de la circonférence du tube en sorte que l'ensemble des trois antennes vient former un manchon venant enserrer le tube ou la canalisation. L'on observe alors un décalage proche de 120 degrés pour les antennes, ce qui permet de couvrir, avec ces trois antennes élémentaires, l'angle solide complet.

Chacune des trois antennes 51-53 est couplée à un circuit électronique de commutation 50 , qui pourra ou non être similaire à celui déjà décrit plus haut, et le circuit de commutation 50 est configuré pour coupler la puce RFID à celle parmi les première, seconde et troisième antenne qui présente une tension la plus élevée.

Le circuit de commutation assure ainsi le couplage de cette antenne spécifique à la puce RFID tout en découplant les deux autres antennes présentant les tensions les plus faibles.

De cette manière, l'on parvient à réaliser, suivant ce premier mode de réalisation, un transpondeur RFID omnidirectionnel susceptible de fonctionner jusqu'à une grande profondeur.

L'on va à présent décrire un autre mode de réalisation (qui n'est pas selon l'invention) particulièrement efficace.

**3) Macro -étiquette RFID composées de trois puces RFID**

L'on décrit à présent un second mode de réalisation (qui n'est pas selon l'invention), qui se révèle être le mode de réalisation particulièrement préféré par les inventeurs, et qui permet de s'affranchir du circuit électronique de commutation.

D'une manière générale, les inventeurs ont découverts la possibilité d'obtenir une détection omni-directionnelle, insensible à l'orientation de la canalisation dans la tranchée, à condition de prévoir une puce RFID spécifique associée à chacune des antennes et de prévoir un traitement logique de la communication susceptible d'intervenir entre les puces RFID et le transmetteur....

Un tel transpondeur sera composé de :

- une première puce RFID associée à une première antenne, laquelle offre une surface couvrant une première partie de l'enveloppe extérieure de la canalisation polymère ;

- une seconde puce RFID associée à une seconde antenne, laquelle présente une surface venant couvrir une seconde partie de la surface extérieure de la canalisation polymère, la seconde partie étant distincte de ladite première partie.

Pour permettre le fonctionnement du transpondeur, l'on prévoit en outre d'insérer dans chacune des puces RFID une information logique permettant de communiquer le groupement des deux puces RFID réalisées au sein de la canalisation. Dans un mode de réalisation particulier, la première puce RFID est configurée pour comporter un champ permettant le stockage d'un élément d'identification ou numéro de série, Unique Identifier (UID), de la seconde puce RFID. Inversement, la seconde puce RFID est configurée pour comporter un champ permettant le stockage d'un élément d'identification, UID, de la première puce RFID.

Les puces RFID sont ensuite configurées pour transmettre ces informations à un détecteur de surface dès leur activation. Ainsi le détecteur de surface devient informé du groupement logique réalisé entre les deux puces RFID, et accessoirement peut déterminer que les deux puces RFID appartiennent à une même canalisation polymère enfouie.

Dans un mode de réalisation particulièrement efficace (qui n'est pas selon l'invention), inspiré de la disposition de la figure 8f déjà rencontrée précédemment, les inventeurs ont obtenus les meilleurs résultats en venant combiner trois antennes jointives, décalées de 120 degrés, au sein d'un manchon venant enserrer le tube ou la canalisation.

De préférence, comme cela est illustré dans la figure 9a, le transpondeur du second mode de réalisation disposera de trois antennes et trois puces RFID comme cela est illustré dans la figure 9a.

L'on voit que le transpondeur comporte :

- une première puce RFID 61 associée à une première antenne 60, laquelle offre une surface couvrant une première partie de l'enveloppe extérieure de la canalisation polymère ;
- une seconde puce RFID 71 associée à une seconde antenne 70, laquelle présente une surface venant couvrir une seconde partie de la surface extérieure de la canalisation polymère, la seconde partie étant distincte de ladite première partie ; et
- une troisième puce RFID 81 associée à troisième antenne 80, laquelle présente une surface couvrant une troisième partie de la surface extérieure de ladite canalisation polymère.

Comme dans la configuration de la figure 8f, les trois antennes 60, 70 et 80 sont de forme sensiblement rectangulaire, et jointive au niveau de leur longueur. Une fois enroulée autour de la canalisation, elles viennent former un manchon venant enserrer cette dernière et chaque antenne est décalée d'un angle de 120 degrés par rapport à la précédente.

Pour assurer le traitement logique lors de la détection RFID par un détecteur de surface, l'on prévoit de configurer :

- la première puce RFID 61 pour y stocker les éléments d'identification ou numéro de série, Unique Identifier (UID), des seconde et troisième puces RFID ;
- la seconde puce RFID 71 pour y stocker les éléments d'identification, UID, des première et troisième puces RFID ;
- la troisième puce RFID 81 pour y stocker les éléments d'identification, UID des première et seconde puces RFID.

Ainsi lorsqu'une puce est activée par le détecteur, elle va pouvoir lui envoyer le numéro d'UID des deux autres puces RFID qui lui sont associées au sein de la même étiquette RFID. Dès ce moment, le détecteur sait que ces trois numéros d'identification UID sont associés au sein d'un même groupement. Le logiciel exécuté au sein du détecteur de surface pourra alors, quel que soit l'une des trois puces activée en cours de détection/localisation, la traiter correctement comme s'il ne voyait qu'un seul transpondeur RFID localisé sur la canalisation.

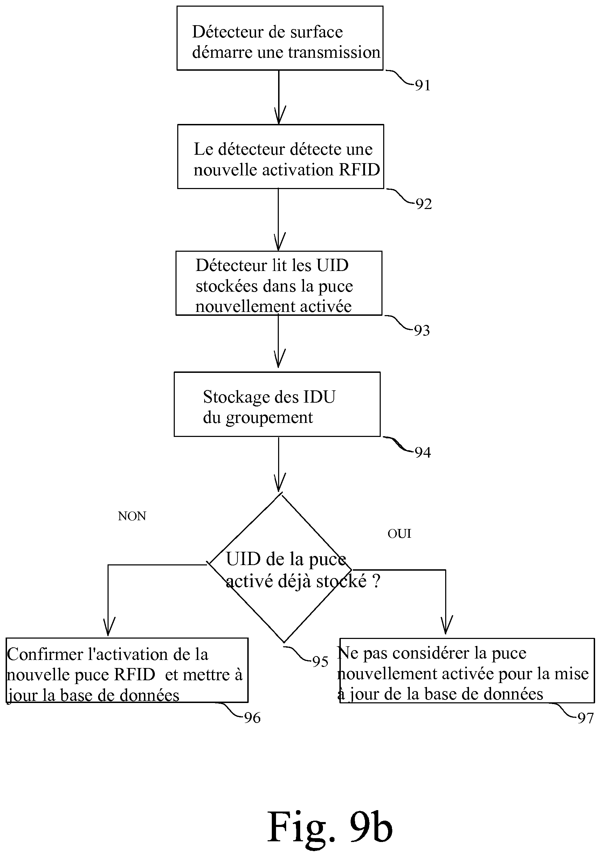

L'on décrit à présent, en relation avec la figure 9b, le processus d'activation du détecteur de surface communiquant avec les étiquettes et transpondeurs RFID.

Dans une 91, le détecteur de surface démarre une transmission RFID ou une tentative de transmission en générant un signal électromagnétique destiné à la reconnaissance d'une étiquette RFID enfouie dans le sol.

Dans une étape 92, le procédé détecte une activation potentielle de l'une des trois puces RFID appartenant à un même groupement logique, par exemple la puce 61. En général, seule sera activée la puce RFID 61-71-81 qui sera associée à une antenne positionnée de manière la plus favorable et qui recevra suffisamment d'énergie du détecteur de surface.

Une fois activée, la communication s'opère conformément au standard prévu dans la norme RFID et que, par souci de concision, il n'est pas nécessaire de reproduire ici.

On relèvera simplement que, dans une étape 93, le détecteur de surface reçoit communication des informations stockées dans la puce nouvellement activée, en lisant notamment le contenu du champ spécifique de la puce RFID destiné au stockage des UID des puces potentiellement associée au sein du même transpondeur. Ainsi le détecteur de surface reçoit communication par la puce RFID 61 des deux autres identifiants des puces 71 et 81 qui forme la même unité logique au sein du transpondeur fixé sur la canalisation 10.

Dans une étape 94, le détecteur de surface procède alors au stockage des identifiants UID des deux autres puces sœurs de la puce RFID 61 nouvellement activée. Ce stockage s'effectue dans une base de données locale stockée dans la mémoire du détecteur de surface.

Puis, dans une étape 95, le détecteur compare le numéro UID de la puce nouvellement activée avec les numéros déjà stockées en mémoire dans la base de données précédemment évoquée.

Si le numéro UID n'apparaît pas comme étant déjà stocké, alors le procédé va vers une étape 96 où l'activation de la puce RFID 61 est confirmée comme devant permettre une mise à jour de la base de données des canalisations découvertes.

Au contraire, si le test de l'étape 95 s'avère être positif, c'est-à-dire que le numéro UID de la puce activé correspond à un numéro déjà préalablement stocké en mémoire, alors de détecteur ne prend pas en considération l'UID de la puce nouvellement activée pour mettre à jour la base de données des canalisations découvertes, car celle-ci appartient à un groupement logique déjà préalablement détecté et donc, à un transpondeur déjà identifié.

Le procédé décrit permet ainsi, comme on le voit, d'éviter au détecteur de conclure à la présence de deux canalisation séparées, associées respectivement deux puces RFID distinctes.

Un tel traitement logique permet ainsi de simplifier considérablement la solution et la mise au point d'un transpondeur RFID omnidirectionnel, puisqu'il n'est plus nécessaire d'envisager la conception et la fabrication d'un circuit électronique de commutation.

## Revendications

1. Transpondeur pour un système de communication sans fil et d'identification sans contact, de type RFID, configuré pour être apposé sur une canalisation polymère (10) enfouie, le transpondeur comprenant:

   - une puce RFID (21) ;
   - un circuit électronique de commutation (16,17) couplé à la dite puce RFID ;
   - une première antenne (11, 51) couplée audit circuit de commutation, la dite première antenne (11) ayant une surface configurée pour couvrir une première partie de la surface extérieure de ladite canalisation polymère (10);
   - une seconde antenne (12, 52) couplée audit circuit de commutation, ladite seconde antenne (12, 52) ayant une surface configurée pour couvrir une seconde partie de la surface extérieure de ladite canalisation polymère, ladite seconde partie étant distincte de ladite première partie ;

   dans lequel ledit circuit de commutation (16,17) est configuré pour :

   - Coupler ladite première antenne à ladite puce RFID lorsque la tension captée au bord de la dite première antenne et correspondant au champ magnétique par un émetteur RFID est supérieure à la tension captée au bord de la seconde antenne ;
   - Coupler ladite seconde antenne à ladite puce RFID lorsque la tension captée au bord de la dite seconde antenne par un émetteur RFID est supérieure à la tension captée au bord de la première antenne.

2. Transpondeur selon la revendication 1 **caractérisé en ce qu'**il comporte en outre :

   - une troisième antenne (53) couplée audit circuit de commutation, ladite troisième antenne (53) ayant une surface configurée pour couvrir une troisième partie de la surface extérieure de ladite canalisation polymère, la surface de couverture de chacune desdites première, seconde et troisième antennes correspondant à un angle de 120 degrés,

   et dans lequel ledit circuit de commutation est configuré pour :

   - Coupler la puce RFID à celle parmi les première, seconde et troisième antenne (51, 52, 53) qui présente une tension la plus élevée , dans lequel ledit circuit de commutation découple les deux autres antennes présentant les tensions les plus faibles.

## Patentansprüche

1. Transponder für ein drahtloses Kommunikationssystem und kontaktloses Identifikationssystem vom RFID-Typ, der beschaffen ist zur Anbringung an einem vergrabenen Polymerrohr (10), wobei der Transponder Folgendes umfasst:

   - einen RFID-Chip (21,);
   - einen elektronischen Schaltkreis (16, 17), der mit dem RFID-Chip gekoppelt ist;
   - eine erste Antenne (11, 51), die mit dem Schaltkreis gekoppelt ist, wobei die erste Antenne (11) eine Fläche aufweist, die einen ersten Teil der Außenfläche des Polymerrohrs (10) bedeckt;
   - eine zweite Antenne (12, 52), die mit dem Schaltkreis gekoppelt ist, wobei die zweite Antenne (12, 52) eine Fläche aufweist, die einen zweiten Abschnitt der Außenfläche des Polymerrohrs bedeckt, wobei der zweite Abschnitt von dem ersten Abschnitt verschieden ist; wobei der Schaltkreis (16, 17) konfiguriert ist, zum:

- Koppeln der ersten Antenne mit dem RFID-Chip, wenn die an der Kante der ersten Antenne gemessene Spannung, die dem Magnetfeld eines RFID-Senders entspricht, höher ist als die an der Kante der zweiten Antenne gemessene Spannung;
- Koppeln der zweiten Antenne mit dem RFID-Chip, wenn die von einem RFID-Sender an der Kante der zweiten Antenne erfasste Spannung größer ist als die an der Kante der ersten Antenne erfasste Spannung.

2. Transponder nach Anspruch 1, **dadurch gekennzeichnet, dass** er außerdem umfasst:

- eine dritte Antenne (53), die mit dem Schaltkreis gekoppelt ist, wobei die dritte Antenne (53) eine Fläche aufweist, die einen dritten Teil der Außenfläche des Polymerrohrs abdeckt, wobei die Abdeckungsfläche jeder der ersten, zweiten und dritten Antennen einem Winkel von 120 Grad entspricht,

und wobei der Schaltkreis konfiguriert ist, zum:

- Koppeln des RFID-Chips mit derjenigen der ersten, zweiten und dritten Antenne (51 , 52, 53), die eine höhere Spannung aufweist, wobei der Schaltkreis die anderen beiden Antennen mit den niedrigsten Spannungen entkoppelt.

**Claims**

1. Transponder for a wireless communication and contactless identification system, of the RFID type, intended to be affixed to a buried polymer pipe (10), the transpondeur comprising:

- an RFID chip (21);
- an electronic switching circuit (16,17) coupled to said RFID chip;
- a first antenna (11, 51) coupled to said switching circuit, said first antenna (11) having a surface covering a first part of the outer surface of said polymer pipe (10);
- a second antenna (12, 52) coupled to said switching circuit, said second antenna (12, 52) having a surface covering a second part of the external surface of said polymer pipe, said second part being distinct from said first part;

wherein said switching circuit (16, 17) is configured to:

- couple said first antenna to said RFID chip when the voltage sensed at the edge of said first antenna and corresponding to the magnetic field by an RFID transmitter is greater than the voltage sensed at edge the second antenna;
- couple said second antenna to said RFID chip when the voltage sensed at the edge of said second antenna by an RFID transmitter is greater than the voltage sensed at the edge of the first antenna.

2. Transponder according to claim 1 **characterized in that** it further comprises:

- a third antenna (53) coupled to said switching circuit, said third antenna (53) having a surface covering a third part of the external surface of said polymer pipe, the coverage area of each of said first, second and third antennas corresponding to an angle of 120 degrees, and

wherein said switching circuit is configured to:

- couple the RFID chip to that among the first, second and third antenna (51, 52, 53) which has a higher voltage, in which said switching circuit decouples the other two antennas having the lower voltages.

Fig. 1

Fig. 2

Fig. 3

Fig. 4

Fig. 5

Fig. 6a

# Fig. 6b

# Fig. 6c

Fig. 7a

Fig. 7b

# Fig. 7c

# Fig. 7d

Fig. 8a

Fig. 8b

Fig. 8c

Fig. 8d

Fig. 8e

53

52

51

tube ou canalisation

50

x

10

# Fig. 8f

60 61

70 71

80 81

RFID

RFID

RFID

tube ou canalisation

x

10

# Fig. 9a

Détecteur de surface
démarre une transmission

~91

Le détecteur détecte une
nouvelle activation RFID

~92

Détecteur lit les UID
stockées dans la puce
nouvellement activée

~93

Stockage des IDU
du groupement

~94

NON

OUI

UID de la puce
activé déjà stocké ?

~95

Confirmer l'activation de la
nouvelle puce RFID  et mettre à
jour la base de données

~96

Ne pas considérer la puce
nouvellement activée pour la mise
à jour de la base de données

~97

# Fig. 9b

Fig. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011157941 A
- WO 2012062471 A
- EP 2017074142 W

- FR 1610392
- US 2007057769 A
- US 2017310367 A